# EUROPEAN PATENT SPECIFICATION

(11) **EP 3 839 747 B1**
(45) Date of publication and mention of the grant of the patent: **28.05.2025**
(21) Application number: 20194493.1
(22) Date of filing: 04.09.2020
(51) Int. Cl.: G06F 12/0804, G06F 12/0811, G06F 13/16

(54) **MULTI-LEVEL MEMORY WITH IMPROVED MEMORY SIDE CACHE IMPLEMENTATION**
MEHRSTUFIGER SPEICHER MIT VERBESSERTER SPEICHERSEITIGEN CACHE-IMPLEMENTIERUNG
MÉMOIRE À NIVEAUX MULTIPLES COMPORTANT UNE MISE EN UVRE AMÉLIORÉE DU CACHE CÔTÉ MÉMOIRE

(30) Priority: 19.12.2019 US 201916721045
(43) Date of publication of application: 23.06.2021
(73) Proprietor: Intel Corporation, Santa Clara, CA 95054 (US)
(72) Inventor: GALBI, Duane E., Santa Clara, CA 95054 (US); BURRES, Bradley A., Santa Clara, CA 95054 (US); ADILETTA, Matthew J., Santa Clara, CA 95054 (US); WILKINSON, Hugh, Santa Clara, CA 95054 (US); GORIUS, Aaron, Santa Clara, CA 95054 (US)
(74) Representative: Rummler, Felix

(56) References cited:
- US-A1- 2014 304 475
- US-A1- 2017 147 496
- US-A1- 2017 329 712
- US-A1- 2018 285 267
- US-A1- 2019 095 329
- US-A1- 2019 108 145

## Description

### Background

Computing system designers are continually seeking ways to improve the performance of the computing systems they design. An area of increasing attention is the memory performance. Here, if processor performance continues to increase as a consequence of manufacturing improvements (e.g., reduced minimum feature size) and/or architectural improvements, the computer system as a whole will not reach its computational potential if the performance of the memory used by the processor is not able to keep pace with the computational logic.

US 2019/108145 A1 describes a central processing unit (CPU) directly coupled to an accelerator dual in-line memory module (DIMM) card that is plugged into a DIMM slot. The CPU includes a master memory controller that sends requests or offloads tasks to the accelerator DIMM card via a low-latency double data rate (DDR) interface. The acceleration DIMM card includes a slave memory controller for translating the received requests, a decoder for decoding the translated requests, control circuitry for orchestrating the data flow within the DIMM card, hardware acceleration resources that can be dynamically programmed to support a wide variety of custom functions, and input-output components for interfacing with various types of non-volatile and/or volatile memory and for connecting with other types of storage and processing devices.

US 2014/304475 A1 describes a computer system for flushing a specified region of a memory side cache (MSC) within a multi-level memory hierarchy. The computer system comprises: a memory subsystem comprised of a non-volatile system memory and a volatile memory side cache (MSC) for caching portions of the non-volatile system memory; and a flush engine for flushing a specified region of the MSC to the non-volatile system memory in response to a deactivation condition associated with the specified region of the MSC.

US 2017/147496 A1 and US 2018/285267 A1 describes systems pertaining to the technological background.

### Summary of Invention

The present invention is defined in the independent claims.

### Figures

A better understanding of the present invention can be obtained from the following detailed description in conjunction with the following drawings, in which:
Fig. 1 shows a central processing unit (CPU) package having multiple system-on-chips (SOCs) and corresponding external memory (prior art);
Fig. 2 shows a memory having an external memory side cache (prior art);
Fig. 3a shows a memory implementation having an in-package memory side cache;
Fig. 3b shows another memory implementation having an in-package memory side cache;
Fig. 4 shows a memory having an in-package memory side cache with a separate back-end logic chip;
Figs. 5a, 5b, 5c and 5d show exemplary cache and memory configurations;
Fig. 6 shows a computing system.

### Detailed Description

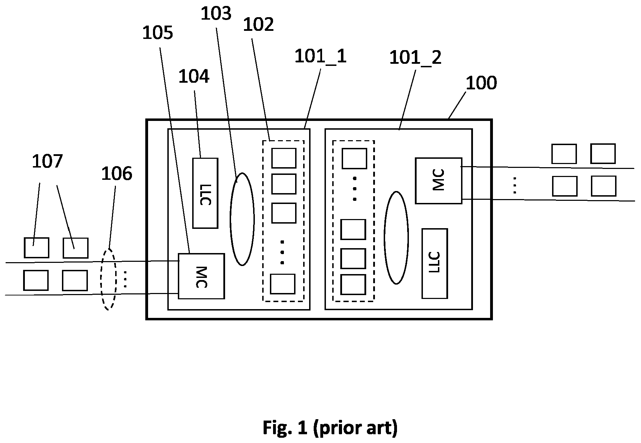

Fig. 1 shows multiple system-on-chips (SOCs) 101_1, 101_2 in a single package 100. As observed in Fig. 1 each CPU SOC 101 includes multiple CPU processing cores 102 interconnected by some kind of network 103 to a last level cache (LLC) 104 and a main memory controller 105 ("main memory" can also be referred to as "system memory"). For ease of drawing, the CPU cores, internal network, LLC and main memory controller of only SOC 101_1 are labeled. Moreover, again for ease of drawing, only one main memory controller 105 is depicted per SOC even though SOCs currently being designed have a large enough number of CPU cores (e.g., 32, 48, etc.) to justify more than one memory controller per SOC.

As each CPU core calls for data and/or instructions it first looks through a hierarchy of CPU caches. The last CPU cache in the hierarchy is the LLC 104. If the sought for data/instruction is not found in the LLC 104, a request is made to the main memory controller 105 for the data/instruction.

As can be seen, the memory controller is coupled to external main memory by way of multiple dual data rate (DDR) memory channels 106 such as an industry standard DDR memory channel (e.g., a DDR standard promulgated by the Joint Electronic Device Engineering Council (JEDEC) (e.g., DDR4, DDR5, etc.)). Each channel is coupled to one or more memory modules 107 (e.g., a dual in-line memory module (DIMM) having dynamic random access memory (DRAM) memory chips). The address of the sought for data/instruction is resolved to a particular memory channel and module that is plugged into that memory channel. The desired information, in the case of a read, is then obtained from the module over the channel and provided to the CPU core that requested it.

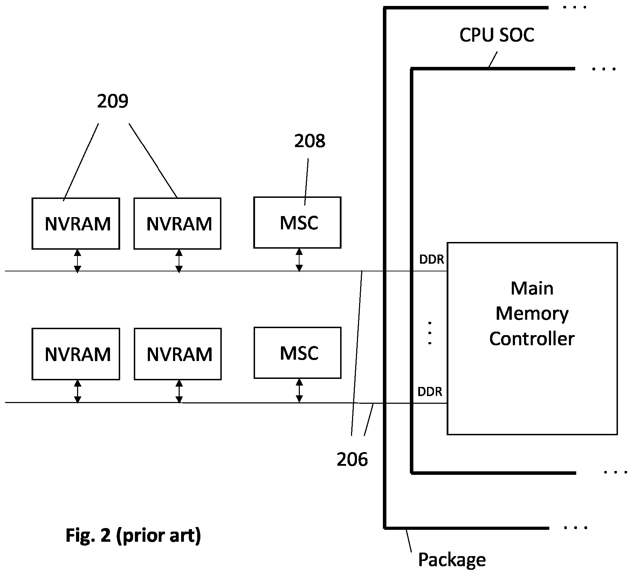

Fig. 2 shows an emerging memory implementation in which a memory side cache 208 is placed on one or more of the DDR memory channels 206. Here, one or more memory modules 209 that are composed, e.g., of an emerging non volatile random access memory (NVRAM) technology are also plugged into one or more of the DDR memory channels 206. Unlike traditional non volatile memory, the emerging non volatile memory that is disposed on the NVRAM memory modules 209 is byte addressable (e.g., data can be written to and/or read from the memory at byte granularity).

That is, whereas, traditional non volatile memory (e.g., flash memory) has been relegated to non volatile mass storage because it is only capable of accesses and/or erasures at larger granularities (e.g., page, block, sector) and, therefore, cannot operate as byte addressable main memory, by contrast, newer emerging NVRAM technologies are capable of being accessed at byte level granularity (and/or cache line granularity) and therefore can operate as main memory.

Emerging NVRAM memory technologies are often composed of three dimensional arrays of storage cells that are formed above a semiconductor chip's substrate amongst/within the chip's interconnect wiring. Such cells are commonly resistive and store a particular logic value by imposing a particular resistance through the cell (e.g., a first resistance corresponds to a first stored logical value and a second resistance corresponds to a second logical value). Examples of such memory include, among possible others, Optane^{™} memory from Intel Corporation, 3D XPoint^{™} memory from Micron corporation, QuantX^{™} memory from micron corporation, phase change memory, resistive random access memory, dielectric random access memory, ferroelectric random access memory (FeRAM), magnetic random access memory, and spin transfer torque random access memory (STT-RAM).

The use of emerging NVRAM memory in a main memory role can offer advantages for the overall computing system (such as the elimination of internal traffic congestion and power consumption concerning "write-backs" or "commitments" of main memory content back to mass storage). However, such emerging NVRAM memory nevertheless tends to be slower than dynamic random access memory (DRAM) which has been the traditional technology used for main memory.

In order to compensate for the increased main memory access latencies that would be observed if main memory was entirely implemented with emerging NVRAM memory, as observed in Fig. 2, one or more memory modules containing DRAM 208 are plugged into the DDR memory channels 206 and operate as a memory side cache (MSC) 208. According to the particular implementation of Fig. 2, each memory channel has its own dedicated memory side cache which operates as a cache for the NVRAM modules on the same memory channel.

According to one approach, on each channel, the capacity of only the NVRAM memory 209 is largely viewed as the system memory address space of that channel. By contrast, the capacity of the DRAM memory side cache 208 on the channel is largely not reserved as system memory address space, but rather, a store for the data/instructions in the NVRAM memory space 209 of the MSC's channel that are most frequently accessed (alternate implementations allow the MSC of one channel to cache data/instructions of another channel). By keeping the most frequently accessed NVRAM items in the faster DRAM memory side cache 208, continued use of such items can be serviced from the DRAM memory side cache 208 rather than the slower NVRAM memory 209.

Here, a memory side cache 208 is different from a CPU last level cache in that a memory side cache 208 attempts to store the items that are most frequently accessed in main memory, rather than, as with the CPU last level cache, the items that are most frequently accessed from a particular component or type of component (the CPU cores). By contrast, the memory side cache will cache the items that are most desired in main memory as a whole which can be requested by any component in the system that uses main memory. Thus, if a GPU or networking interface or both are generating large amounts of main memory requests, the memory side cache will be apt to keep the items associated with these components as well as the CPU cores.

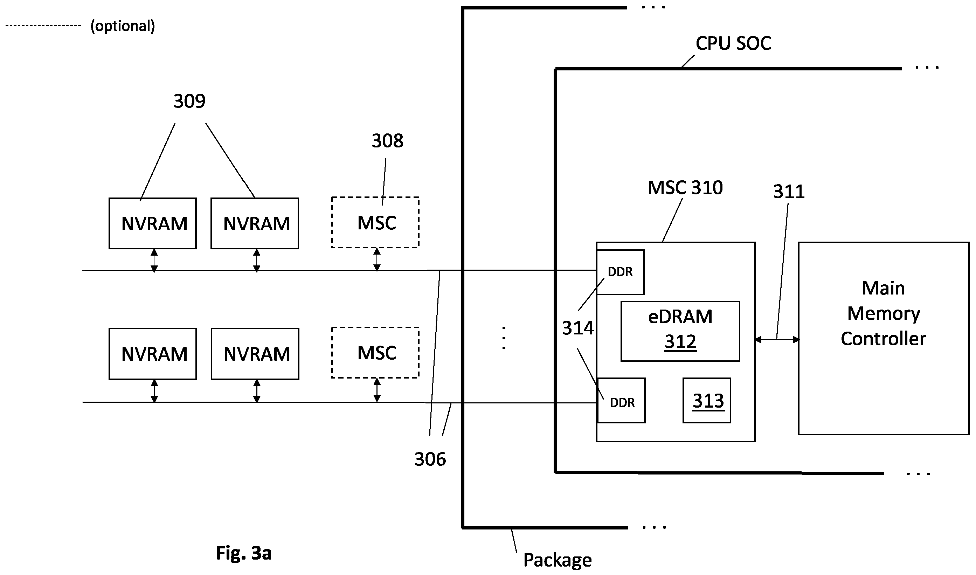

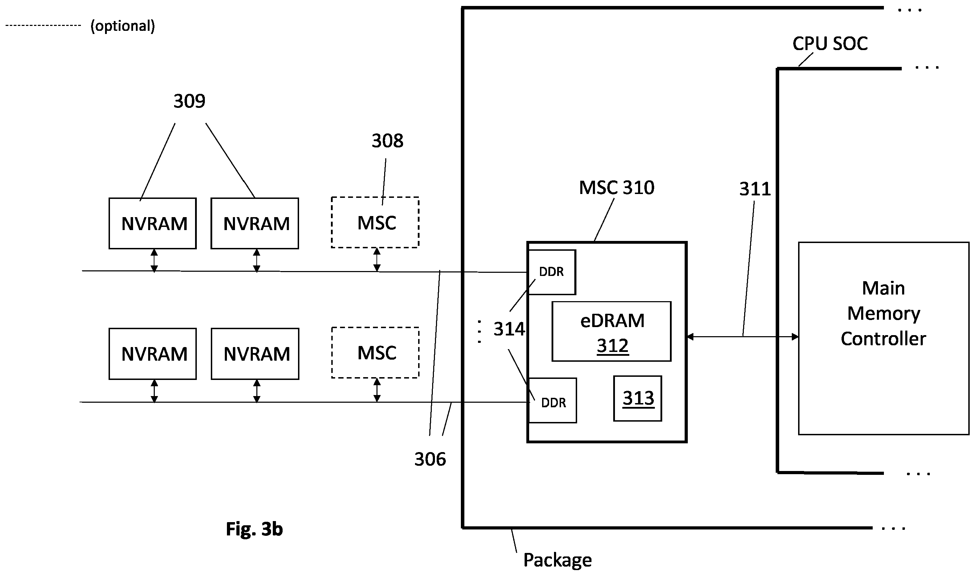

Figs. 3a and 3b each depict an improved memory side cache architecture that integrates a DRAM memory side cache 310 within the package that contains the SOC. As such, the memory side cache 310 can be used not only as another (faster) level of memory side cache to be used with (or without) the external memory side cache 208/308 of the architecture of Fig. 2, but also, can be used to improve the performance of the traditional memory implementation of Fig. 1 that only plugs external DRAM memory modules 107 to DDR memory channels 106 that reside outside the SOC package.

As observed in the improved approach of Figs. 3a and 3b, a memory side cache 310 is implemented within the CPU package containing the SOCs. Here, the memory side cache can be implemented: 1) as a separate functional block within a SOC (Fig. 3a); and/or, 2) a separate memory side cache chip that is separate from the SOC chip but that is integrated within the same package as the SOC chip (Fig. 3b).

In various embodiments, the memory side cache 310 of either of Figs. 3a and 3b couples to a SOC communication interface 311 that supports out-of-order request/response scenarios. Such interfaces include, to name a few, a memory channel interface that supports out-of-order request responses (e.g., the JEDEC NVDIMM-P protocol), a peripheral component interface extended (PCIe) interface, a Compute Express Link (CXL) interface, an Ultra Path Interconnect (UPI) interface or any comparable technologies, etc..

In the approach of Fig. 3a where the memory side cache 310 is integrated in the SOC, the out-of-order interface 311 is made available internally within the SOC. In the approach of Fig. 3b where the memory side cache 310 is implemented as a separate chip from the SOC, the out-of-order interface 311 emanates from the SOC as an external interface.

Notably, in various embodiments, as depicted in Figs. 3a and 3b, the improved memory side cache 310 is implemented with embedded DRAM 312 (eDRAM) within the SOC package. Here, eDRAM 312 within the SOC package will have reduced access times as compared to an external DRAM memory module (e.g., MSC 208, 308) that is coupled to an external memory channel.

Here, generalizing, the highest frequency that can be propagated along a signal path will be reduced with each external physical connection that exists along that signal path. In the case of an external memory module 208/308 that is coupled to a memory channel 206/306 that emanates from a SOC package, there are four external physical connections: 1) the physical connection from the packaged die I/Os to the package substrate; 2) the physical connection from the package I/Os to the memory channel; 3) the physical connection from the memory channel to the memory module I/Os; and, 4) the physical connection from memory module substrate to the I/Os of the targeted memory chip.

By contrast, with the memory side cache 310 being implemented with eDRAM 312 within the SOC package, at most there are only two external physical connections. In the case where the eDRAM memory side cache 310 is implemented internally within the SOC (Fig. 3a), there are no external physical connections. In the case where the memory side cache 310 is implemented within the SOC package as a separate chip from the SOC (Fig. 3b), the external physical connections are: 1) the I/Os of the SOC to the package substrate; and, 2) the I/Os of the package substrate to the memory side cache die 310.

As such, the improved memory side cache 310 can respond to requests in less time than an external memory side cache 208/308. As is understood in the art, eDRAM 312 integrates DRAM on a high density logic die (as compared to a traditional DRAM memory die which has limited logic integration capability).

As discussed above, the memory side cache 310 includes an interface 311 that supports out-of-order transactions that communicates with the SOC CPU memory controller. That is, for instance, if the interface 311 that emanates from the SOC CPU memory controller is an NVDIMM-P interface, the memory side cache component 310 also includes an NVDIMM-P interface 311.

As the memory controller services the requests it receives, it issues memory access requests over the interface 311 to the memory side cache 310. The internal cache hit/miss logic 313 of the memory side cache 310 then snoops the eDRAM cache 312 for the requested data item. If there is a hit, in the case of a read, the data is fetched from the eDRAM cache 312 and returned to the memory controller. In the case of a write, the content of the targeted data item in the eDRAM cache 312 is written over with new information that was included with the write request.

In the case of a cache miss, the internal logic of the memory side cache 310 invokes a "back-end" interface 314 that couples to an external memory channel and corresponding memory modules (e.g., DIMMs) that plug into these memory channels. Here, the back-end interfaces 314 may correspond to industry standard DDR memory channels (e.g., JEDEC DDR4, JEDEC DDR5, etc.). As such, from the perspective of the external memory modules, the CPU package "appears" as a traditional CPU package (that memory modules couple to industry standard memory channels that emanate from the CPU package).

Thus, in the case of a cache miss, assuming there is no additional (second level) memory side cache memory module 208/308 as discussed above with respect to Fig. 2, whether processing a read or write request, logic circuitry internal to the memory side cache 310 first resolves the address of the request to a particular memory channel and memory module on the memory channel, and then issues a request on the memory channel that targets the memory module. In various embodiments, the memory module is an NVRAM memory module 309 that contains one or more memory chips composed of emerging non volatile memory (the memory modules may also include a controller logic chip to perform various routines that are unique to non volatile memory such as wear leveling, implementation of ingress and/or egress request and/or response queues, on board out-of-order request processing logic, etc.).

Extended embodiments can also include additional (2^{nd} level) memory side cache functionality. For example, according to one approach, each NVRAM memory module 309 also includes an on-board DRAM cache to cache the most frequently requested items of the particular memory module.

According to another approach, which can be combined with the approach described just above, a 2^{nd} level DRAM memory side cache module 308, like the memory side cache module 208 discussed above with respect to Fig. 2, is plugged into a memory channel with one or more NVRAM memory modules 309.

In this case, the logic to perform the cache lookup into the 2^{nd} level memory side cache module 308 can be located on the 2^{nd} level memory side cache module 308, or, can be located on the back-end of the memory side cache function 310 that is integrated in the SOC package. If there is a cache hit, in the case of a read, the desired data is read from the 2^{nd} level memory side cache module 308, provided to the memory side cache function 310 and forwarded to the SOC. In the case of a write, new data that is included in the request is written over the targeted data item in the 2^{nd} level memory side cache module 308. Note that the memory side cache function 310 can also include embedded logic to keep both the request transaction on the SOC interface 311 and the request transaction on the memory channel 306 active and/or other wise operable according to their respective protocols.

According to an embodiment where the hit/miss cache logic for determining hits/misses in the 2^{nd} level memory side cache module 308 resides in the memory side cache function 310, the memory side cache function first performs a read of the 2^{nd} level memory side cache module 308 to determine if there is a hit or a miss. Here, for instance, the address of any request maps to only one (or a limited plurality) of "slots" in the memory space of the 2^{nd} level memory side cache module 308. A tag that is, e.g., some segment of the address of a data is kept with the data item in the 2^{nd} level memory side cache 308 and is read from the 2^{nd} level cache 308 along with the data item itself. From the tag that is returned with the data item, the memory side cache function 310 can determine if a hit or miss has occurred. In the case of a hit the request is serviced with the data item that was read from the 2^{nd} level memory module 308. In the case of a miss the request is directed over the memory channel 306 to the appropriate NVRAM memory module 309.

Returning to a discussion of the (first level) memory side cache function 310, note that such a cache may be implemented according to various architectures such as direct mapped, set-associative or associative. Here, because the eDRAM can be integrated on a high density logic process, set-associative or associative caching architectures are feasible. This stands in contrast, e.g., to external DRAM memory side cache module solutions 208/308 that do not include cache hit/miss logic (e.g., to keep power consumption of the module within defined limits). Such solutions have been known to implement a direct mapped cache in order to limit the external DRAM cache access 308 to one access per request.

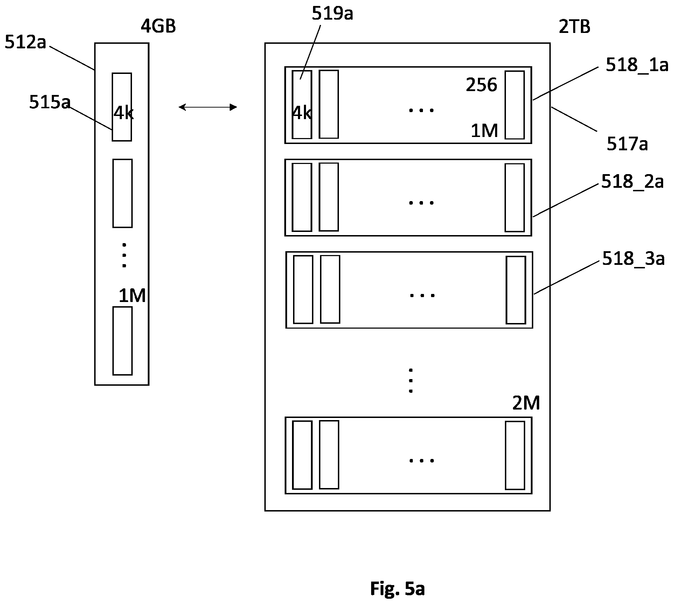

As such, the hit/miss logic of the eDRAM 312 memory side cache function 310 may include tag array(s) and/or other logic that supports associative or set-associative caches to track which data items are stored in which cache slots. Additionally, the eDRAM, through banking or other schemes, can be designed to have sufficient bandwidth to support a read-before-write scheme for either or both a tag array and a data array. An extended discussion of a possible memory address to cache slot mapping approach is provided in more detail below with respect to Figs. 5a through 5d.

In various embodiments, interface 311 is an out-of-order interface because the presence of the memory side cache 310 can result in later requests that experience a cache hit in the eDRAM cache 312 completing before earlier requests that missed in the memory side cache 310. This possibility generally can exist even in implementations that do not include non volatile memory modules that are coupled to an external memory channel 306. That is, even if all the memory modules that are coupled to the external memory channels 306 are DRAM memory modules, the comparatively faster eDRAM memory side cache 310 could result in out-of-order request completion.

If a 2nd level memory side cache exists, either as a stand alone DRAM memory module 308 that acts as a cache for NVRAM modules that plug into the same (and/or other) memory channels, or, as DRAM cache that resides on a NVRAM module to store more frequently items on a per module basis, the possibility of out-of-order request completion can also exist on the memory channels 306. In this case, the back-end interface 314 should also support out-of-order processing (such as the JEDEC's NVDIMM-P version of DDR).

With respect to replacement policy of the eDRAM memory side cache function 310, various embodiments are possible. According to one approach, a miss in the eDRAM cache 312 for a particular data item results in that data item being entered in the eDRAM cache 312 after it has been called up from its external memory module. Generally, after extended runtimes and heavy memory usage, entry of such a data item into the eDRAM cache 312 will result in the eviction of another data item from the eDRAM cache 312 back to an external memory module in order to make room for the new entry. Here, various eviction policies can be used such as least frequently used (LFU), least recently used (LRU), etc.

Also, the memory side cache function 310 may support for various types of write modes. A first mode, referred to as "write-through", writes a copy of a data item that has been newly written/updated in the eDRAM cache 312 back to its corresponding location in an external memory module. According to this approach, the most recent version of a data item will not only be in the eDRAM cache 312 but will also be in an external memory module. Another type of mode, referred to as "write-back" does not write data that has been newly written/updated in the eDRAM cache 312 back to a memory module. Instead, the hit/miss logic 313 of the memory side cache function 310 keeps track of which of its data items are dirty and which ones are clean. If a data item is never written to after it is first entered into the eDRAM cache 312 it is clean and need not be written back to its external memory module if it is subsequently evicted from the eDRAM cache 312. By contrast, if data is updated with new data after it is first written into eDRAM cache 312, the data is marked as dirty and will be written back to its corresponding memory module if it is subsequently evicted from the eDRAM cache 312.

In various embodiments, the memory side cache function includes register space to allow configurability of various modes of operation for the eDRAM cache. For example, the register space may specify which caching policy is to be applied (e.g., LFU, LRU, etc.) and/or which write mode is to be applied (e.g., write-through, write-back, etc.).

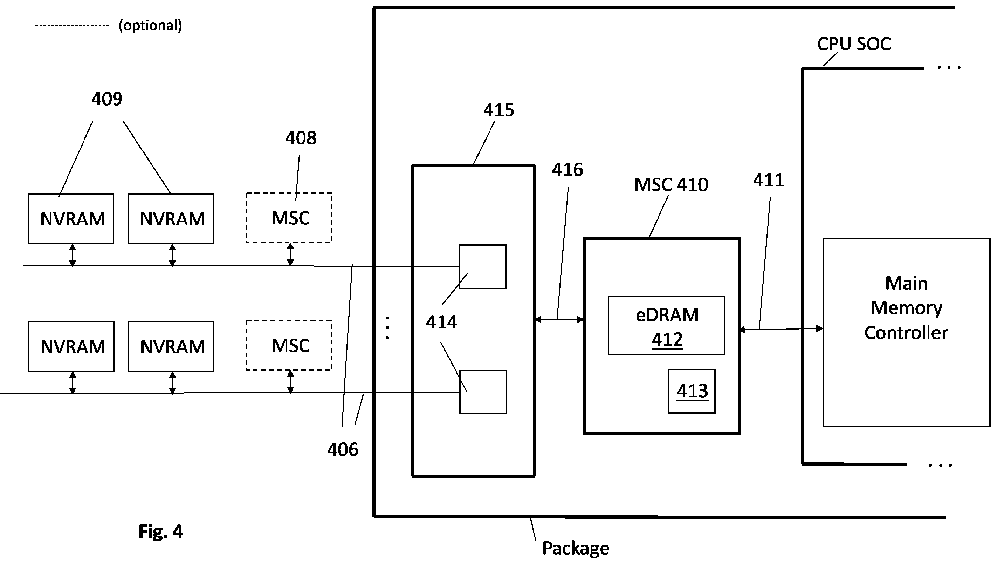

Figs. 3a and 3b have shown embodiments where the "back-end" logic 314 is implemented in the same chip as the memory side cache function 310. Fig. 4 shows another approach in which the back-end logic 414 is implemented as a separate semiconductor chip 415 than the memory side cache function 410. Separating the back-end logic 414 and memory side cache 410 into different semiconductor chips allows for customized external interfaces from the package to the external memory 408, 409. That is, although back-end logic 414 could implement a DDR interface, with, e.g., a different back-end chip the back-end logic 414 could implement any of PCIe, CXL, UPI, or other interface besides DDR. As such, packaged solutions having memory interfaces of any mix/type can be easily made.

The interface 416 between the back-end logic chip 415 and the memory side cache 410 can be any high speed communication link having sufficiently high throughput (e.g., Direct Media Interface (DMI), PCIe, etc.). Although Fig. 4 shows a particular embodiment in which the memory side cache 410 is separate from the SOC, in various embodiments, the memory side cache is integrated on the SOC.

Note that even in the approach of Fig. 3b, different memory side cache chips may be manufactured having different back-end logic interfaces 314 to, e.g., allow for custom external memory interface offerings from the package. That is a first type of memory side cache chip having a DDR back-end interfaces is integrated into the package if an external DDR interface is desired, a second type of memory side cache chip having a different external memory interface is integrated into the package if a different external memory interface is desired, etc.

In various embodiments, where intra-package chip to chip communication exists (e.g., interface 311 in Fig. 3b and/or interface 416 in Fig. 4), a high performance intra package interconnect technology can be used. Examples include a 2.5D package integration technology such as, to name a few possibilities, package on package (PoP), package in package (PiP) or an embedded interconnect bridge (such as embedded multi-die interconnect bridge (EMIB) from Intel).

Additionally, although embodiments described above have stressed the presence of the first level memory side cache being within the same package as a SOC, in yet other embodiments, a first level memory side cache resides outsides any SOC package but is implemented on a same CPU module (or "socket") as one or more SOCs. Here, for instance, one or more packaged SOCs may be integrated onto a module that plugs into, e.g., a larger system motherboard. Memory DIMMs, including potentially a second level DRAM memory side cache DIMM and one or more NVRAM DIMMs, are plugged into memory channels that reside on the larger system motherboard. The first level memory side cache, by contrast, resides on the module with the packaged SOC(s). Because communications to/from the first level memory side cache does not propagate through the module/motherboard interconnects, the first level memory side cache should exhibit faster access times than any DIMMs that are plugged into the motherboard.

Note that although embodiments above have stressed a package having two SOCs per package, other embodiments may have more than two SOCs per package, or, have only one SOC per package. Moreover, although embodiments above have stressed implementation of the teachings above toward a main memory solution, other embodiments may be implemented elsewhere, such as the local memory for a high performance co-processor (e.g., an Artificial Intelligence co-processor, a vector co-processor, an image processor, a graphics processor, etc.).

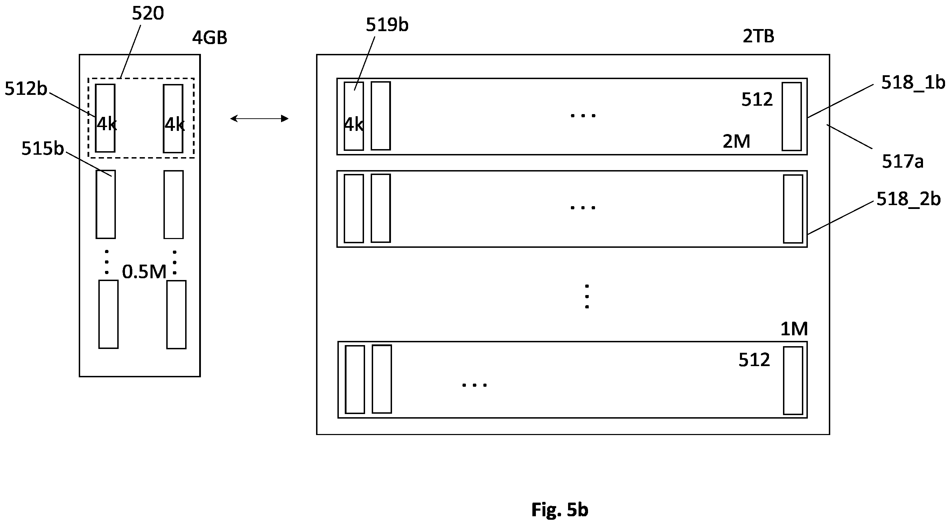

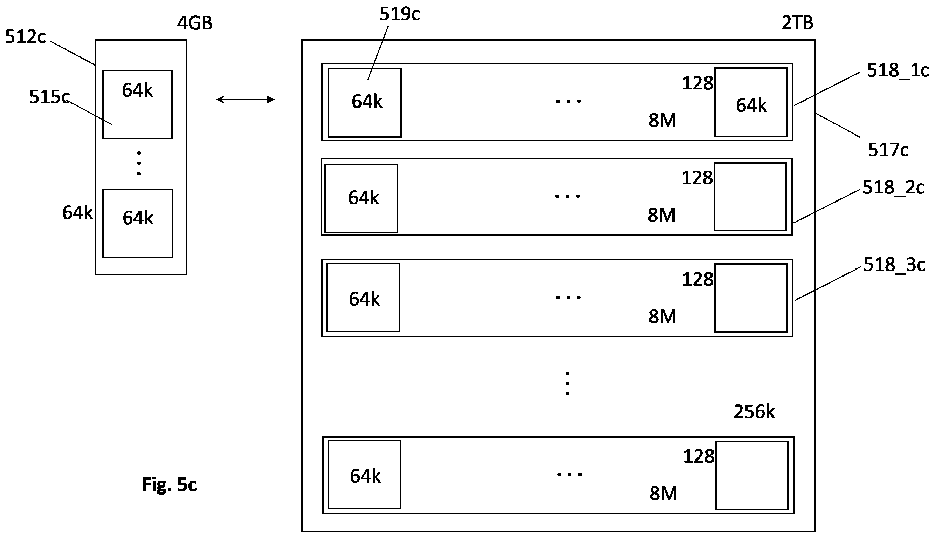

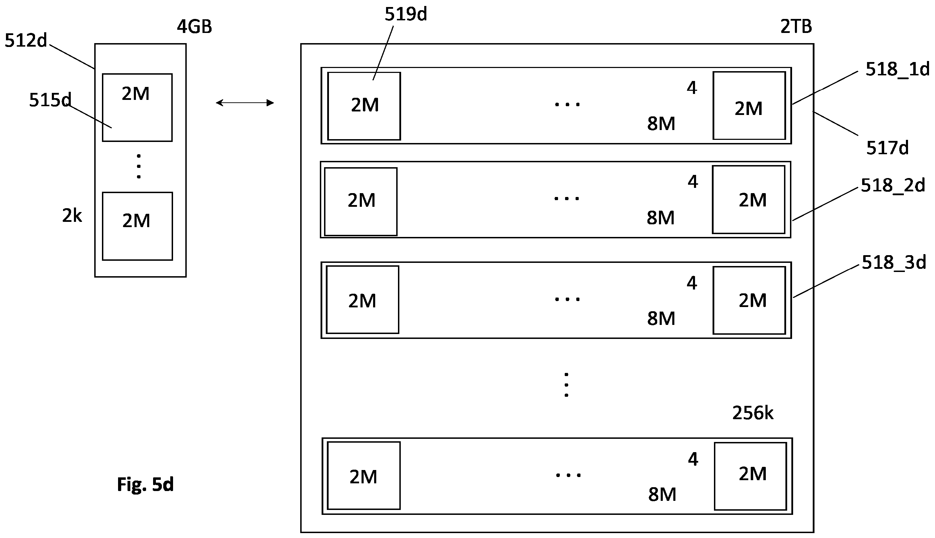

Figs. 5a through 5d show different organizations/configurations of the system memory address space and the capacity of the first level cache 312. Here, different contiguous sections of system memory are viewed as pages, and, multiple pages are assigned to a same "page group". (For ease of drawing, only one memory page 519 is labeled in each of Figs. 5a, 5b, 5c and 5d). The total capacity of system memory 517 in each of Figs. 5a through 5d is 2TB. The respective sizes of the pages 519 in system memory in Figs. 5a through 5d are 4kB in Figs. 5a and 5b, 64kB in Fig. 5c, and 2MB in Fig. 5d.

From these page size configurations, system memory 517 is organized as: 1) 2M page groups 518_1a, 518_2a, 518_3a, etc. each composed of 256 pages (1M per page group) in Fig. 5a; 2) 1M page groups 518_1b, 518_2b, 518_3b, etc. each composed of 512 pages (2M per page group) in Fig. 5b; 3) 256k page groups 518_1c, 518_2c, 518_3c, etc. each composed of 128 pages (8MB per page group) in Fig. 5c; 4) 256k page groups 518_1d, 518_2d, 518_3d, etc. each composed of 4 pages (8MB per page group) in Fig. 5d.

As can be seen from Figs. 5a through 5d, there is a practically unlimited range of organizational/configuration options concerning page size, numbers of pages per page group (which sets the page group size) and the number of page groups within the system memory. Page sizes can range, e.g., from traditional page sizes (e.g., 4kB per page) to super page sizes (e.g., 1MB, 2MB, etc. per page). Page size and number of pages per page group determine page group size, and, page group size determines the number of page groups in system memory.

Each of Figs. 5a through 5d also depict the organization/configuration of the first level cache 312/512 for each of the corresponding memory organization/configuration examples discussed just above. Notably, in each of the examples, the size of a page 515 in the cache 512 is the same as the size of a page 519 in memory 517, and, there are more page groups 518 in memory 517 than there are cache slots (space to hold one page 515) in the first level cache 512.

According to an embodiment, each page 515 in the cache 512 is assigned to a particular one or more of the page groups (page groups assigned to a same cache page can be referred to as "siblings"). Memory pages 519 in a same page group 518 compete for the page(s) in cache 512 that have been assigned to the page group 518. If these same page(s) in the cache 512 have been assigned to additional page groups in memory it expands the pool of pages in memory that will compete for these pages (ideally, the most frequently accessed pages in memory will most frequently occupy the pages in cache). For example, if cache page 515 has been assigned to page groups 518_1, 518_2 and 518_3, all the pages in "sibling" page groups 518_1, 518_2, 518_3 compete for cache page 515.

Caching Quality of Service (QoS) is effected for different pages 519 in memory 517 by adjusting more or less pages 515 in the first level cache 512 for the page groups 518 they belong to. That is, for example, a page group 518 whose pages 519 are to receive a relatively high QoS has fewer page group "siblings" that it competes with for the same page(s) in the cache 512. Likewise, a page group whose pages are to receive a relatively low QoS has more page group siblings that is competes with for the same page(s) in the cache.

Said another way, a page in cache 512 that is to service higher QoS pages in memory 517 is assigned fewer page groups 518, while, a page in cache 512 that is to service lower QoS pages in memory is assigned a greater number of page groups 518. For example, a highest QoS level may assign one or more pages in cache 512 to only one, particular page group (e.g., page group 518_1), while a lowest QoS level may assing another page in cache 512 to many (e.g., ten, hundred, etc.) other page groups in the memory 517. Here, by assigning specific pages in cache 517 to a specific number of page groups 518, the amount of competition amongst pages in memory 517 for same page(s) in cache 512 can be precisely configured thereby establishing with some precision relative caching QoS amongst all the pages in memory 517.

In various embodiments the logical and/or physical addresses of pages for inclusion in a same page group is determined by applying some function to a specific set of address bits. In a simplest case, pages in a same page group have the same bit pattern in a specific section of the address space. In other embodiments, some function may be applied to a same section of address space to determine what page group a page belongs to. Here, referring briefly back to Figs. 3a and 3b, the cache hit/miss logic 313 and/or associated logic circuitry includes mapping logic circuitry that can map any page in memory, based on its page group assignment, to its correct page(s) in the first level cache 312.

An operating system (OS), operating system instance and/or virtual machine monitor (VMM) or hypervisior can readily configure the eDRAM space of the cache 312 for particular page sizes in the cache and configure the system memory for particular page sizes, number of pages per page group and number of page groups in the memory. As such, any of an OS, OS instance and/or VMM/hypervisor can readily configure, e.g., different applications, different kinds of data within an application or amongst applications to varying degrees of first level caching QoS as described above.

The aforementioned mapping logic, in various embodiments, can include configuration register space to establish the page size in the cache 312 while the "back end" logic circuitry 314 or associated logic circuitry (including but not limited to the SOC memory controller) can include configuration register space to establish any/all of page size in memory, number of pages per page group and number of page groups in system memory.

Apart from configuring page size in the cache 512, the mapping logic circuitry of the hit/miss logic circuitry and/or associated logic circuitry, in various embodiments, can also establish ways of pages in the first level cache. That is, groups of pages in the first level cache 512, rather than single pages, are assigned to same page group(s) in memory. Fig. 5b shows an example of a cache configured as a two way cache. Here two cache pages (e.g., such as page pair 520) are assigned together to a same one or more page groups. Pages in the assigned page group(s) then compete for either of the pages in page pair 520. Other embodiments having three, four, etc. ways can also be configured in the first level cache 512.

Note that in various embodiments the aforementioned memory pages of Fig. 5 are configured by the system to determine, e.g., different QoS for different applications. Such pages, however, need not be the same pages recognized or referenced by an OS or OS instance during nominal runtime. In various embodiments such a scenario is likely as the above described memory pages of Fig. 5 are apt to be much larger than the pages referred to by the operating system during runtime (which are traditionally 4kB in size). Thus, any of an OS, OS instance or VMM may be designed to recognize the existence of smaller (e.g., 4kB) pages that are explicitly callable by an OS or OS instance during runtime and that fit into the larger memory pages of the caching system of Fig. 5.

By so doing, the OS or OS instance is free to refer to such smaller pages as per normal/traditional runtime operation, including, for example, demoting certain smaller pages from system memory to mass storage and promoting certain smaller pages from mass storage to system memory. Generally, system hardware (e.g., memory management unit (MMU) and/or translation look-aside buffer (TLB) logic circuitry) can be designed to provide physical addresses to smaller pages of a same application (e.g., same software thread and virtual address range) so that they will map into a same larger memory page used for memory side cache QoS treatment as described above with respect to Fig. 5.

Comparing the improved QOS approach of Fig. 5 to a standard QOS approach, note that, traditionally, if different QOS groups with a cache are desired, different CPU cache ways or different groups of CPU cache ways are assigned to each QOS group. Caches tend to have less than16 ways, so only about 16 QOS groups are possible. By contrast, with the improved approach of Fig. 5 (address based QOS with a remapping table) allows for a very large number of QOS groups. One can have a different QOS group with each "page" in the cache. In order to belong to a page group, one allocates memory from the memory ranges of the "pages" in the page group. These pages groups can then be assigned to "pages" in the cache in a manner which creates the correct overall QOS desired.

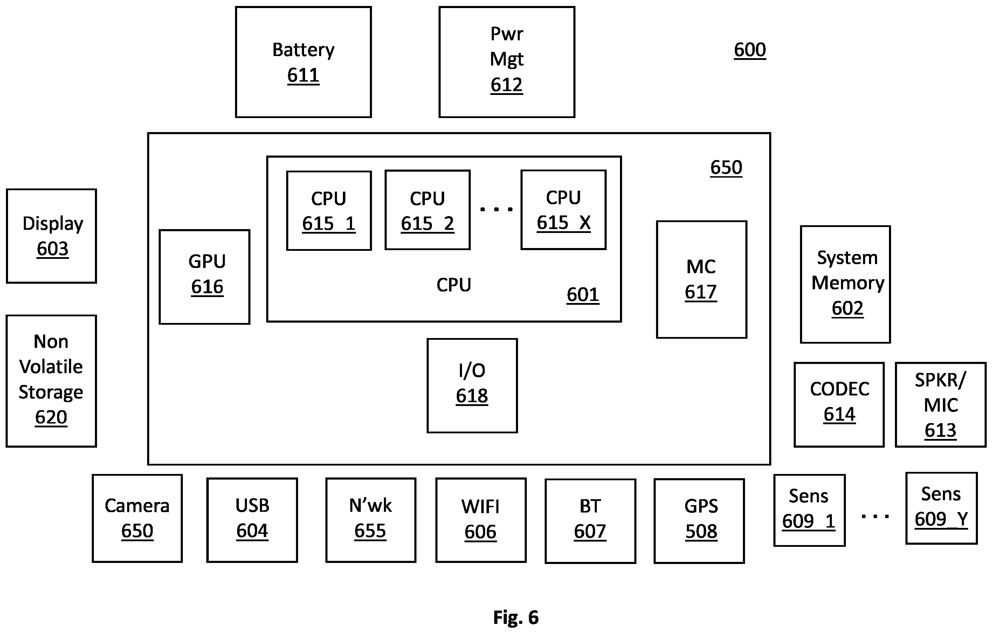

FIG. 6 provides an exemplary depiction of a computing system 600 (e.g., a smartphone, a tablet computer, a laptop computer, a desktop computer, a server computer, etc.). As observed in FIG. 6, the basic computing system 600 may include a central processing unit 601 (which may include, e.g., a plurality of general purpose processing cores 615_1 through 615_X) and a main memory controller 617 disposed on a multi-core processor or applications processor, system memory 602, a display 603 (e.g., touchscreen, flat-panel), a local wired point-to-point link (e.g., USB) interface 604, various network I/O functions 605 (such as an Ethernet interface and/or cellular modem subsystem), a wireless local area network (e.g., WiFi) interface 606, a wireless point-to-point link (e.g., Bluetooth) interface 607 and a Global Positioning System interface 608, various sensors 609_1 through 609_Y, one or more cameras 610, a battery 611, a power management control unit 612, a speaker and microphone 613 and an audio coder/decoder 614.

An applications processor or multi-core processor 650 may include one or more general purpose processing cores 615 within its CPU 601, one or more graphical processing units 616, a memory management function 617 (e.g., a memory controller) and an I/O control function 618. The general purpose processing cores 615 typically execute the system and application software of the computing system. The graphics processing unit 616 typically executes graphics intensive functions to, e.g., generate graphics information that is presented on the display 603. The memory control function 617 interfaces with the system memory 602 to write/read data to/from system memory 602.

The system/main memory 602 can be implemented as a multi-level system memory having an "in-package" memory side cache such as the memory side cache 310 described at length above. The external memory of other components (e.g., one or more high performance co-processors) may also have an "in package" memory side cache as described at length above.

Each of the touchscreen display 603, the communication interfaces 604 - 607, the GPS interface 608, the sensors 609, the camera(s) 610, and the speaker/microphone codec 613, 614 all can be viewed as various forms of I/O (input and/or output) relative to the overall computing system including, where appropriate, an integrated peripheral device as well (e.g., the one or more cameras 610). Depending on implementation, various ones of these I/O components may be integrated on the applications processor/multi-core processor 650 or may be located off the die or outside the package of the applications processor/multi-core processor 650. The power management control unit 612 generally controls the power consumption of the system 600.

Embodiments of the invention may include various processes as set forth above. The processes may be embodied in machine-executable instructions. The instructions can be used to cause a general-purpose or special-purpose processor to perform certain processes. Alternatively, these processes may be performed by specific/custom hardware components that contain hardwired logic circuitry or programmable logic circuitry (e.g., FPGA, PLD) for performing the processes, or by any combination of programmed computer components and custom hardware components.

Elements of the present invention may also be provided as a machine-readable medium for storing the machine-executable instructions. The machine-readable medium may include, but is not limited to, floppy diskettes, optical disks, CD-ROMs, and magneto-optical disks, FLASH memory, ROMs, RAMs, EPROMs, EEPROMs, magnetic or optical cards, propagation media or other type of media/machine-readable medium suitable for storing electronic instructions. For example, the present invention may be downloaded as a computer program which may be transferred from a remote computer (e.g., a server) to a requesting computer (e.g., a client) by way of data signals embodied in a carrier wave or other propagation medium via a communication link (e.g., a modem or network connection).

In the foregoing specification, the invention has been described with reference to specific exemplary embodiments thereof. It will, however, be evident that various modifications and changes may be made thereto without departing from the scope of the invention as set forth in the appended claims. The specification and drawings are, accordingly, to be regarded in an illustrative rather than a restrictive sense.

## Claims

1. An apparatus, comprising:
a semiconductor chip package comprising:
a) a system on chip, SOC, the SOC comprising a memory controller;
b) an interface (306) to an external memory (309);
c) a memory side cache (310) comprising embedded dynamic random access memory, eDRAM, (312) coupled between the memory controller and the interface to the external memory, the eDRAM to cache more frequently used items of the external memory; and,
d) an out-of-order interface (311) between the memory controller and the memory side cache,
wherein the memory controller is configured to issue a memory access request over the out-of-order interface (311) to the memory side cache (310), and
wherein internal logic of the memory side cache (310) is configured to invoke the interface (306) to the external memory in case an internal cache hit/miss logic (313) of the memory side cache (310) determines a cache miss.

2. The apparatus of claim 1 wherein the memory side cache (310) is implemented on a separate semiconductor chip than the SOC.

3. The apparatus of claim 2 wherein the interface (306) to the external memory (309) is integrated on the same semiconductor chip as the memory side cache (310).

4. The apparatus of claim 2 wherein the interface (306) to the external memory (309) is integrated on a different semiconductor chip than the memory side cache (310) and the SOC.

5. The apparatus of claim 2 wherein the semiconductor chip package comprises mapping logic circuitry to map a page in the memory side cache to a page group in the external memory.

6. The apparatus of claim 5 wherein the mapping logic circuitry is further to map a second page in the memory side cache to a second page group in the external memory wherein:
the page and second page do not compete for same space in the memory side cache; and,
the page group and second page group have different respective maximum allowable numbers of pages.

7. The apparatus of claim 6 wherein one of the page groups having a lesser respective maximum allowable number of pages than the other of the page groups is to provide greater quality of service than the other of the page groups.

8. The apparatus of claim 7 wherein page size of any of the page groups is configurable.

9. The apparatus of claim 8 wherein configured page size is able to be 1MB or greater.

10. An apparatus, comprising:
a CPU module comprising:
a) a packaged SOC, the SOC comprising a memory controller;
b) an interface (306) to an external memory (309);
c) a memory side cache (310) comprising eDRAM coupled between the memory controller and the interface to the external memory, the eDRAM to cache more frequently used items of the external memory;
d) an out-of-order interface (311) between the memory controller and the memory side cache; and,
e) electrical interconnects to connect the CPU module to a system motherboard,
wherein the memory controller is configured to issue a memory access request over the out-of-order interface (311) to the memory side cache (310), and
wherein internal logic of the memory side cache (310) is configured to invoke the interface (306) to the external memory in case an internal cache hit/miss logic (313) of the memory side cache (310) determines a cache miss.

11. The apparatus of claim 10 wherein the memory side cache is implemented on a separate semiconductor chip than the SOC.

12. The apparatus of claim 11 wherein the interface to the external memory is integrated on the same semiconductor chip as the memory side cache.

13. The apparatus of claim 11 wherein the interface to the external memory is integrated on a different semiconductor chip than the memory side cache and the SOC.

14. A computing system comprising the subject matter claimed in any of claims 1 through 13.

## Patentansprüche

1. Vorrichtung, die Folgendes umfasst:
ein Halbleiter-Chipgehäuse, das Folgendes umfasst:
a) ein System auf Chip (SOC), wobei das SOC einen Speicher-Controller umfasst;
b) eine Schnittstelle (306) zu einem externen Speicher (309);
c) einen speicherseitigen Cache (310), der eingebetteten dynamischen Direktzugriffsspeicher (eDRAM) (312) umfasst, der zwischen dem Speicher-Controller und der Schnittstelle mit dem externen Speicher gekoppelt ist, wobei das eDRAM häufiger verwendete Elemente des externen Speichers zwischenspeichert; und,
d) eine Out-of-Order-Schnittstelle (311) zwischen dem Speicher-Controller und dem speicherseitigen Cache,
wobei der Speicher-Controller dazu ausgelegt ist, eine Speicherzugriffsanfrage über die Out-of-Order-Schnittstelle (311) an den speicherseitigen Cache (310) auszugeben, und
wobei die interne Logik des speicherseitigen Caches (310) dazu ausgelegt ist, die Schnittstelle (306) zu dem externen Speicher aufzurufen, falls eine interne Cache-Treffer-/Fehltrefferlogik (313) des speicherseitigen Caches (310) einen Cache-Fehltreffer bestimmt.

2. Vorrichtung nach Anspruch 1, wobei der speicherseitige Cache (310) auf einem separaten Halbleiterchip als das SOC implementiert ist.

3. Vorrichtung nach Anspruch 2, wobei die Schnittstelle (306) zu dem externen Speicher (309) auf demselben Halbleiterchip wie der speicherseitige Cache (310) integriert ist.

4. Vorrichtung nach Anspruch 2, wobei die Schnittstelle (306) zu dem externen Speicher (309) auf einem anderen Halbleiterchip als dem speicherseitigen Cache (310) und dem SOC integriert ist.

5. Vorrichtung nach Anspruch 2, wobei das Halbleiter-Chipgehäuse eine Mapping-Logikschaltung zum Abbilden einer Seite in dem speicherseitigen Cache auf eine Seitengruppe in dem externen Speicher umfasst.

6. Vorrichtung nach Anspruch 5, wobei die Mapping-Logikschaltung ferner ausgelegt ist, um eine zweite Seite in dem speicherseitigen Cache auf eine zweite Seitengruppe in dem externen Speicher abzubilden, wobei:
die Seite und die zweite Seite nicht um denselben Speicherplatz im speicherseitigen Cache konkurrieren; und
die Seitengruppe und die zweite Seitengruppe jeweils unterschiedliche maximal zulässige Seitenzahlen aufweisen.

7. Vorrichtung nach Anspruch 6, wobei eine der Seitengruppen mit einer geringeren jeweiligen maximal zulässigen Anzahl von Seiten als die andere der Seitengruppen eine höhere Dienstqualität bereitstellen soll als die andere der Seitengruppen.

8. Vorrichtung nach Anspruch 7, wobei die Seitengröße einer beliebigen der Seitengruppen konfigurierbar ist.

9. Vorrichtung nach Anspruch 8, wobei die konfigurierte Seitengröße 1 MB oder mehr betragen kann.

10. Vorrichtung, die Folgendes umfasst:
ein CPU-Modul, das Folgendes umfasst:
a) ein SOC in einem Gehäuse, wobei das SOC einen Speicher-Controller umfasst;
b) eine Schnittstelle (306) zu einem externen Speicher (309);
c) einen speicherseitigen Cache (310), der eDRAM umfasst, der zwischen dem Speicher-Controller und der Schnittstelle zu dem externen Speicher gekoppelt ist, wobei der eDRAM dazu dient, häufiger verwendete Posten des externen Speichers zwischenzuspeichern;
d) eine Out-of-Order-Schnittstelle (311) zwischen dem Speicher-Controller und dem speicherseitigen Cache; und,
e) elektrische Zwischenverbindungen, um das CPU-Modul mit einer System-Hauptplatine zu verbinden, wobei der Speicher-Controller konfiguriert ist, um eine Speicherzugriffsanfrage über die Out-of-Order-Schnittstelle (311) an den speicherseitigen Cache (310) auszugeben, und
wobei die interne Logik des speicherseitigen Caches (310) dazu ausgelegt ist, die Schnittstelle (306) zu dem externen Speicher aufzurufen, falls eine interne Cache-Treffer-/Fehltrefferlogik (313) des speicherseitigen Caches (310) einen Cache-Fehltreffer bestimmt.

11. Vorrichtung nach Anspruch 10, wobei der speicherseitige Cache auf einem getrennten Halbleiterchip als das SOC implementiert ist.

12. Vorrichtung nach Anspruch 11, wobei die Schnittstelle zu dem externen Speicher auf demselben Halbleiterchip wie der speicherseitige Cache integriert ist.

13. Vorrichtung nach Anspruch 11, wobei die Schnittstelle zu dem externen Speicher auf einem anderen Halbleiterchip als dem speicherseitigen Cache und dem SOC integriert ist.

14. Computersystem, das den in einem der Ansprüche 1 bis 13 beanspruchten Gegenstand umfasst.

## Revendications

1. Appareil, comprenant :
un boîtier de puce à semi-conducteur comprenant :
a) un système sur puce, « System On Chip » SOC, le SOC comprenant un contrôleur de mémoire ;
b) une interface (306) à une mémoire externe (309) ;
c) un cache côté mémoire (310) comprenant une mémoire vive dynamique intégrée, « embedded Dynamic Random Access Memory » eDRAM, (312) couplée entre le contrôleur de mémoire et l'interface à la mémoire externe, l'eDRAM étant destinée à mettre en cache des élément plus fréquemment utilisé de la mémoire externe ; et,
d) une interface en désordre (311) entre le contrôleur de mémoire et le cache côté mémoire,
dans lequel le contrôleur de mémoire est configuré pour émettre une demande d'accès à mémoire par l'intermédiaire de l'interface en désordre (311) au cache côté mémoire (310), et
dans lequel une logique interne du cache côté mémoire (310) est configurée pour appeler l'interface (306) à la mémoire externe au cas où une logique absence/présence de cache interne (313) du cache côté mémoire (310) détermine qu'il y a une absence de cache.

2. Appareil de la revendication 1, dans lequel le cache côté mémoire (310) est implémenté sur une puce à semi-conducteur distincte du SOC.

3. Appareil de la revendication 2, dans lequel l'interface (306) à la mémoire externe (309) est intégrée sur la même puce à semi-conducteur que le cache côté mémoire (310).

4. Appareil de la revendication 2, dans lequel l'interface (306) à la mémoire externe (309) est intégrée sur une puce à semi-conducteur différente du cache côté mémoire (310) et du SOC.

5. Appareil de la revendication 2, dans lequel le boîtier de puce à semi-conducteur comprend une circuiterie de logique de mappage destinée à mapper une page dans le cache côté mémoire sur un groupe de page dans la mémoire externe.

6. Appareil de la revendication 5, dans lequel la circuiterie de logique de mappage est en outre destinée à mapper une seconde page dans le cache côté mémoire sur un second groupe de pages dans la mémoire externe dans lequel :
la page et la second page ne rivalisent pas pour un même espace dans le cache côté mémoire ; et,
le groupe de pages et le second groupe de pages ont des nombres admissibles maximums respectifs différents de pages.

7. Appareil de la revendication 6, dans lequel un des groupes de pages ayant un nombre admissible maximum respectif de pages inférieur à celui de l'autre des groupes de pages est destiné à fournir une meilleure qualité de service que l'autre des groupes de pages.

8. Appareil de la revendication 7, dans lequel une taille de page d'un quelconque des groupes de pages est configurable.

9. Appareil de la revendication 8, dans lequel une taille de page configurée peut être de 1MB ou plus.

10. Appareil, comprenant :
un module CPU comprenant :
a) un SOC mis en boîtier, le SOC comprenant un contrôleur de mémoire ;
b) une interface (306) à une mémoire externe (309) ;
c) un cache côté mémoire (310) comprenant une eDRAM couplée entre le contrôleur de mémoire et l'interface à la mémoire externe, l'eDRAM étant destinée à mettre en cache des éléments plus fréquemment utilisés de la mémoire externe ;
d) une interface en désordre (311) entre le contrôleur de mémoire et le cache côté mémoire ; et,
e) des interconnexions électriques destinées à connecter le module CPU à une carte mère de système, dans lequel le contrôleur de mémoire est configuré pour émettre une demande d'accès à mémoire par l'intermédiaire de l'interface en désordre (311) au cache côté mémoire (310), et
dans lequel une logique interne du cache côté mémoire (310) est configurée pour appeler l'interface (306) à la mémoire externe au cas où une logique absence/présence de cache interne (313) du cache côté mémoire (310) détermine qu'il y a une absence de cache.

11. Appareil de la revendication 10, dans lequel le cache côté mémoire est implémenté sur une puce à semi-conducteur distincte du SOC.

12. Appareil de la revendication 11, dans lequel l'interface à la mémoire externe est intégrée sur la même puce à semi-conducteur que le cache côté mémoire.

13. Appareil de la revendication 11, dans lequel l'interface à la mémoire externe est intégrée sur une puce à semi-conducteur différente du cache côté mémoire et le SOC.

14. Système informatique, comprenant le sujet revendiqué dans l'une quelconque des revendications 1 à 13.
